Europäisches Patentamt

(19) European Patent Office

Office européen des brevets

(11) Publication number: **0 128 363**
**A2**

(12) # EUROPEAN PATENT APPLICATION

(21) Application number: **84105261.6**

(22) Date of filing: **09.05.84**

(51) Int. Cl.³: **B 03 B  5/62,** B 03 B  13/04,
B 01 J  47/04

(30) Priority: **12.05.83 US 493828**

(43) Date of publication of application: **19.12.84**
**Bulletin 84/51**

(84) Designated Contracting States: **DE FR GB IT**

(71) Applicant: **ECODYNE CORPORATION, 39 South la Salle**
**Street, Chicago Illiniois 60603 (US)**

(72) Inventor: **Salem, Eli, 80 Roseld Avenue, Deal New**
**Jersey 07723 (US)**

(74) Representative: **Groening, Hans Wilhelm, Dipl.-Ing.,**
**Siebertstrasse 4 Postfach 860 340,**
**D-8000 München 86 (DE)**

(54)  **Conductionmetric resin separation.**

(57)  A method for separating resins of an exhausted, mixed bed resin. The exhausted, mixed bed resin includes (a) an exhausted cation exchange resin having a first density and a first conductance value when suspended in the classifying fluid at a first concentration; (b) inert particulate material having a second density that is less than the first density and having a second conductance value when suspended in the classifying fluid that is at most about 30 percent at the conductance of the cation exchange resin when measured in the classifying fluid at the first concentration; and an exhausted anion exchange resin having a third density that is less than the second density and also having a third conductance value that is greater than the second conductance value when the exhausted anion exchange resin is suspended in classifying fluid and measured at the first concentration. The mixed resin bed is classified with the classifying fluid in a container to form a vertical column of resin such that the cation exchange resin forms a bottom layer, the inert resin forms an intermediate layer and the anion exchange resin forms a top layer. The slurry is passed out of the bottom of the container while the classification is maintained. The conductance value of the passing slurry is measured, and after the conductance value has become substantially constant, the conductance value is stored to determine an initial conductance value. Subsequent conductance values of the passing slurry are also measured and those subsequent conductance values are compared to the initial conductance value. The passage of the slurry out of the container is terminated when the first subsequently measured conductance value is at most about 30 percent of the initial conductance value.

A second embodiment of the invention utilizes only cation and anion exchange resin. The method steps are substantially the same as recited with the embodiment utilizing the inert resin, except that the slurry passage is terminated when the first subsequently measured conductance value is at most about 55 percent of the initial cation exchange resin conductance.

-1-

CONDUCTIONMETRIC RESIN SEPARATION

DESCRIPTION

Technical Field

The present invention relates to the separation of exhausted cationic and anionic exchange resins from a mixed resin bed, and more particularly relates to a method of separation that utilizes conductance values of the mixed resin bed constituents.

Background Art

Beds of mixed cation exchange and anion exchange resins are used in many industrial areas. One particular use of such resin beds is in the deionization of water used in generating steam, wherein the water used should be substantially free from dissolved ionic materials so that a build up of those previously dissolved salts may be avoided in the boiler and associated parts. Thus, water going into the boiler is first passed through the mixed resin bed to exchange dissolved cations and anions for protons and hydroxide ions, respectively.

A mixed resin bed has a finite exchange capacity that is related to the exchange capacities of the resin components, the amount of water passing through the bed, and the ionic content of that water. After the exchange capacity of the resin bed is exhausted, the resin must either be regenerated or discarded.

An exhausted mixed resin bed is rarely discarded due to the relatively high cost of the resins. Rather, the exhausted mixed resin bed is regenerated to provide cation and anion exchange resins having substantially their original exchange capacity.

Several methods have been used to regenerate the exhausted resins in the bed. Typically, the resins are separated. Then, the exhausted cation exchange resin is treated with a protic acid so that protons replace the exchanged cations present in that exhausted resin, while the exhausted anion exchange resin is treated with a solution containing hydroxide ions to replace the anions.

One general method for separating the cation exchange resin from the anion exchange resin utilizes resins having different densities, and suspends those resins in a classifying fluid such that they classify into layers in accordance with their differing densities and particle sizes. A problem with this technique has been that the densities of the different resins are not substantially different enough to afford a substantially complete separation of one resin from the other upon hydraulic classification. To alleviate this problem, a quantity of substantially inert, particulate material having an intermediate destiny and particle size has been used so that on backwashing it is between the cation exchange resin and the anion exchange resin.

Problems still exist in the separation of the resins even when an inert material having an intermediate density between that of the two resins is used. These problems are associated with the determination of the location of the interface between the inert material and cation exchange resin, which is usually the heaviest, as well as the interference between the inert material and the anion exchange resin, which is usually the least dense.

Two methods of detecting the interface between the cation exchange resin and the inert material based on the conductivity properties of slurries of the material in a classifying fluid are disclosed in U.S. Patents No. 4,264,439 and No. 4,298,696. However, neither method is completely successful in automated systems.

In U.S. Patent No. 4,264,439, a conductivity sensor is used to continuously measure the conductivity of a classified resin slurry as it passes from a holding tank. The sensor is connected to a recorder which exhibits a distinct change in the conductivity of the slurry to indicate the interface. The valve permitting passage of the slurry out of the holding tank is closed to retain the anion exchange resin within the holding tank when the distinct change is recorded.

There is, however, no discussion in U.S. Patent No. 4,264,439 of what change, other than a drop, the patentee relies upon for determining the location of the interface between the cation exchange resin and the inert material. An operator apparently must be taught what change to look for, and be required to watch the recorder, detect that desired change in the conductance value, and then shut the valve.

In U.S. Patent No. 4,298,696, a conductivity sensor is used to determine the transition between resins by detecting a decrease in the conductivity of the slurry as it passes out of its holding tank. A decrease to a set conductance value is implied for one embodiment, thereby making difficult the use of classifying waters having substantially different conductance values from one separation to the next. An alternative embodiment for use with classifying water having variable conductivity utilizes two conductivity sensors at separate points to detect a predetermined difference in the conductivity. Again, however, there is no teaching of how to use the data gathered from the sensor. There is also no teaching that the change in measured conductance can be used to automatically stop the flow of resin slurry.

Each of the above methods therefore either requires presence of an operator to make the selection of the conductivity at which the interface between exchange resin and inert material passes the sensor, or the use of a classifying fluid which itself has a relatively constant conductivity so that preset values of conductance can be used by a machine or an operator for selecting the position of the interface.

It would be beneficial therefore if neither an operator, nor a classifying fluid of relatively constant conductivity need be used for selecting the location of the interface between the cation exchange resin and the inert material. The invention described hereinafter provides such a benefit.

Summary Of The Invention

The present invention provides a method for separating the resins of an exhausted or partially exhausted, mixed bed resin. This method comprises the steps of supplying a classifying fluid and an exhausted, mixed bed resin. The exhausted, mixed bed resin includes (a) an exhausted cation exchange resin having a first density and a first conductance value when suspended in the classifying fluid at a first concentration; (b) inert particulate material having a second density that is less than the first density and having a second conductance value when suspended in the classifying fluid that is at most about 30 percent and typically about 15 to about 25 percent, of the conductance of the cation exchange resin when measured in the classifying fluid at the first concentration; and an exhausted anion exchange resin having a third density that is less than the second

-5-

density and also having a third conductance value that is greater than the second conductance value and preferably less than the first conductance value when the exhausted anion exchange resin is suspended in classifying fluid and measured at the first concentration.

The mixed resin bed is classified with the classifying fluid in a container to form a substantially vertical column of slurry having a top end and a bottom end. The exhausted cation exchange resin, particulate inert material and exhausted anion exchange resins are classified in the slurry substantially so that the cation exchange resin forms a bottom layer, the inert material forms an intermediate layer and the anion exchange resin forms a top layer. In preferred practice, the cation exchange resin portion of the bed is expanded to about 15 to about 25 percent over its settled volume during the classification step.

The slurry is passed out of the container from an area near the bottom end of the column while the classification is maintained. The conductance value of the passing slurry is measured, and after the conductance value has become substantially constant, the conductance value is stored to determine an initial conductance value. Subsequent conductance values of the passing slurry are also measured and those subsequent conductance values are compared to the initial conductance value.

The passage of the slurry out of the container is terminated when a subsequently measured conductance value is at most about 30 percent of the initial conductance value. In following this method, the slurry that passes out of the container contains

-6-

substantially all of the exhausted cation exchange resin which is preferably collected.

A method of regenerating a mixed resin bed is also disclosed. According to this method, the resins of an exhausted mixed resin bed are separated as discussed hereinbefore and the separated cation exchange resin is collected. The collected, exhausted cation exchange resin is contacted with an excess of protic acid to produce the proton form of the previously exhausted cation exchange resin and thereby form a regenerated cation exchange resin. The exhausted anion exchange resin is separately contacted with an excess of a hydroxide ion-containing base to produce the hydroxide form of the previously exhausted anionic exchange resin and thereby form a regenerated anion exchange resin. The two regenerated, cation and anion, exchange resins are then admixed to form a regenerated mixed resin bed.

The present invention has several benefits and advantages. One benefit of the invention is that its use in separate separations is not dependent upon a supply of classifying fluid having a particular, predetermined conductivity.

Another benefit of the invention is that the location of the interface between exchange resin and inert material can be determined and a separation of the exchange resins carried out for resin slurries suspended in classifying fluids of varying conductances without the assistance of a human operator.

One of the advantages of this invention is that it is also not dependent upon the initial conductivity of the cation exchange resin, nor upon the conductance value of the classifying fluid.

Still further benefits and advantages of the present invention will be apparent to those skilled in the art from the detailed description, examples, and claims which follow.

Brief Description Of The Drawings

In the drawings following a part of this disclosure;

Figure 1 shows a cross-sectional view of a schematic representation of a classified mixed bed along with its pertinent apparatus; and

Figure 2 shows a typical plot of conductance values verses time for passing slurry of the classified, mixed bed resin.

Detailed Description Of The Invention

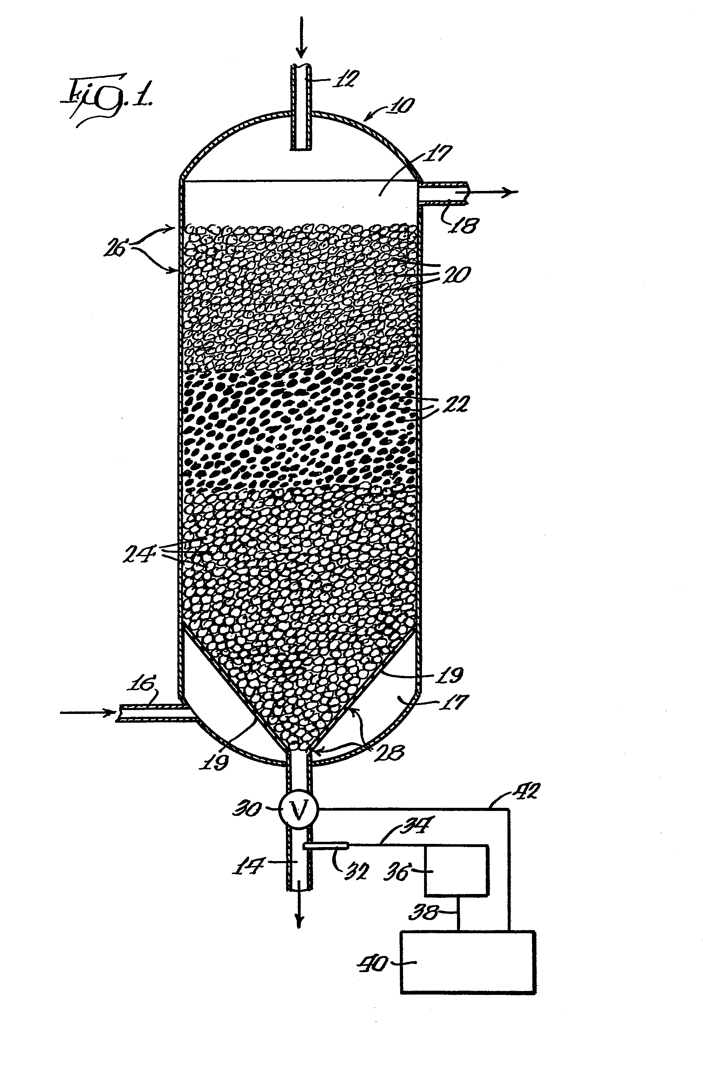

The method of separation in accordance with the present invention is disclosed hereinbelow in conjunction with Figure 1 which shows a schematic cross section of a container or vessel 10 having a resin inlet pipe 12 located near the top of the container 10 and a resin transfer pipe 14 located near the bottom of the container. A classifying fluid inlet pipe 16 is also located near the bottom of the container, while a classifying fluid outlet pipe 18 is located near the top of the container.

The container may also include a foraminous, inverted frustoconically shaped funnel means 19 whose apertures are sufficiently large to permit the flow of classifying fluid 17 therethrough, but which apertures are of a small enough dimension to prevent passage of the resin particles or the particles of inert material classified within the container 10.

The container 10 includes an exhausted mixed bed resin which includes an anion exchange resin 20, a particulate inert material 22 and a cation exchange resin 24 which are classified within the container 10 with a classifying fluid 17, which is preferably water, to form a substantially vertical column of slurry having a top end 26 and a bottom end 28. The resins are classified such that the exhausted cation exchange resin 24 forms a bottom layer, the exhausted anion exchange resin 20 forms a top layer and the inert material 22 forms a layer intermediate between the anion and cation exchange resin.

The term "exhausted" relating to the mixed resin bed or to any of its constituent resins is used herein and in the claims to mean that at least some of the ion exchange capacity of one or more resins has been utilized. In usual practice, the mixed resin bed is regenerated prior to the complete exhaustion of the ion exchange capacity of any of its resin types.

The resin transfer pipe 14 includes a valve 30 for permitting the passage of the slurry of classified, exhausted resin in classifying fluid out of the container, and also includes a means 32 for sensing the conductivity of the passing slurry. Conductivity sensing means 32 is operably connected as by cable 34 to a conductivity measuring device 36 wherein the sensed conductivity is translated into a conductance value, and thereby measured.

The conductivity measuring device 36 is operably connected, as by cable 38, to a means 40 for storing and comparing conductance values. The conductance value storage and comparison means 40 is operably connected by cable 42 to the valve 30 in the resin exit pipe 14 such that when a compared conductance value is at most about 30 percent of the value stored initially, indicating that the interface between the cation exchange resin 24 and the inert material 22 has reached the conductivity sensing means 32, a signal may be transmitted along cable 42 to the valve 30 to shut the valve and thereby stop the flow of resin.

The anion exchange resin, the cation exchange resin and inert particulate material useful herein are well known articles of commerce. All three of the materials are preferably in the form spheroidal beads having a number average particle size of about 0.3 to about 1.2 millimeters with all three of the materials preferably having similar number average particle sizes. It is preferred that the cation exchange resin have a density which is at least about 0.10, and more preferably at least about 0.2, grams per cubic centimeter greater than that of the anion exchange resin with which it is used. The density of the inert particulate material is intermediate between the densities of the cation exchange resin and the anion exchange resin. Typical specific gravities for these materials are as follows: cationic resin, 1.30; inert particulate material, 1.15; anion exchange resin, 1.09; and water, 1.00.

In carrying out their functions as ion exchange resins, the cation exchange resin and anion exchange resin contain chemically bonded functional groups which bear ionic charges when the resins are dispersed in a classifying fluid such as water. The presence of the chemically bonded, ionically charged functional groups and their associated counterions provides conductance to a fluid, such as the classifying fluid, in which each of the resins is dispersed.

The combined conductance value for a given resin when dispersed in a fluid is a function, _inter alia_, of the conductance of the fluid, the identity

-10-

of the charged functional group of the exchange resin, the nature of the counterion associated with the charged functional group and the concentration of the resin in the fluid.

The inert particulate material provides little, if any, conductance when dispersed in water or any classifying fluid. In most preferred practice, the inert particulate material is substantially free from ionic charge-containing functional groups.

Thus, the cation exchange resin whether in a regenerated state, a completely exhausted state, or in a state between complete regeneration and complete exhaustion exhibits a conductance value which is greater than the conductance value of the inert particulate material. Similarly, the anion exchange resin also exhibits a conductance value, when dispersed in a classifying fluid, which is greater than the conductance value of the inert particulate material. In preferred practice the conductance value exhibited by the anion exchange resin is also less than that of the cation exchange resin.

While both the cation exchange resin and the anion exchange resin exhibit conductance values in a classifying fluid which are greater than the conductance value of an inert resin suspended in the same fluid, for ease of understanding, the conductance values for each of the three materials will be discussed herein in regard to the conductance for the standard, first amount of exhausted cation exchange resin dispersed in a standard classifying fluid, namely water. The concentration of resin dispersal used herein as the standard during classification is about 35 percent resin and about 65 percent classifying fluid by volume.

In preferred practice, the inert particulate material has a conductance value in the classifying fluid at the above, standard, first concentration that is at most about 30 percent of the conductance value of the cation exchange resin measured under the same conditions. More preferably, the conductance value of the inert particulate material is less than about 25 percent of the conductance value of the cation exchange resin when measured under the above conditions.

As noted hereinbefore, the three materials which comprise the mixed resin bed are articles of commerce. Exemplary cation exchange resins include, but are not limited to, resins sold under the trademarks DUOLITE-C26TR sold by Diamond Shamrock Corporation and AMBERLITE 200A sold by Rohm and Haas Company. Exemplary anion exchange resin include but are not limited to resins sold under the trademarks DUOLITE A161-TR sold by Diamond Shamrock Corporation, and AMBERLITE 900A sold by Rohm and Haas Company.

The inert particulate material is preferably a solid organic polymer which is insoluble and non-ionic, and is inert to the conditions of ion exchange and regeneration utilized in this process; i.e., non-reactive to acids, bases and salts. Exemplary polymers include those prepared from monoethylenically unsaturated monomers such as styrene, acrylic and methacrylic acid esters of alcohols containing 1 to about 6 carbon atoms, halogenated vinyl compounds such as vinyl chloride and vinylidene chloride, and the like that are cross linked with polyethylenically unsaturated monomers such as divinyl benzene, ethylene glycol dimethacrylate, divinylsulfone and the like.

-12-

Exemplary inert particulate materials include but are not limited to the resins sold under the trademark AMBERSEP 359 sold by Rohm and Haas Company.

In using mixed resin beds, it is preferred to utilize an amount of cation exchange resin whose exchange capacity is substantially identical of the anion exchange resin. It is also preferred to use as little of the inert particulate material as possible so that the total exchange capacity of the mixed resin bed can be maximized for a given volume of the bed.

In carrying out the method for this invention, the mixed resin bed is supplied to the container 10 via the resin inlet pipe 12. The classifying fluid 17 is then introduced into the container 10 to classify the mixed resin bed with excess classifying fluid departing the container 10 via classifying fluid outlet pipe 18.

In preferred practice, the classifying fluid is water. Water in combination with organic solvents, such as, ethanol, methanol, acetone, and the like may also be used. However, it is preferred that the classifying fluid be water, containing substantially no organic solvents.

The water used for classification of the resin bed and that present during passage of the resin slurry from the container 10 are grouped together herein under the name classifying fluid with the understanding that water or classifying fluids of different purities may be used for the classification, and then subsequently replaced by a second classifying fluid having different properties.

In preferred practice, the water used for classification has a conductance value of less than about 10 micromhos, more preferably, the conductance value of the classifying water is less than about 7 micromhos.

Upon completion of the initial classification of the mixed resin bed into an upper anionic exchange resin layer, an intermediate inert particulate material layer and a lower cation exchange resin layer, the flow of the classifying fluid is typically reduced slightly to allow the resins to settle slightly and become somewhat more compacted while maintaining the classified state.

The cation exchange resin portion of the classified mixed resin bed is preferably expanded by an amount of about 15 to about 25 volume percent greater than the volume occupied by that resin in its settled condition, i.e., the cation exchange resin portion is expanded to about 115 to about 125 volume percent of the settled volume of that resin. In more preferred practice the cation exchange resin is expanded by about 118 to about 122 volume percent of its settled volume. The amount of expansion is conveniently measured by the change in the height of the cation exchange resin before and during classification.

The above expansion of the cation exchange resin portion of the mixed resin bed provides greater expansions for the inert particulate material and anionic exchange resin portions of the mixed resin bed. Using mixed resin bed materials as discussed hereinbefore, the inert particulate material expands to a greater degree than does the cationic exchange resin, and the anionic exchange resin expands to a greater degree than does the inert material.

Bed expansion is a function of particle size and density, as well as the water flow rate and temperature. Since the water flow rate into the container 10 is substantially equal to the rate of flow of resin slurry out of the container, it is desirable to maximize that flow rate while not impairing the classification of the mixed resins. The above-described cation exchange resin expansions correspond to flow rates of about 5.5 to about 8.5 gallons per minute per foot$^2$ (gpm/ft$^2$). Lower flow rates do not completely fluidize the cation exchange resin bed and cause a draindown of inert particulate material prior to substantially complete transfer of the cation exchange resin. Too high a flow rate decreases the sharpness of the break between cationic exchange resin and inert particulate material. The above-described cation exchange resin bed expansion and flow rates appear to be general and independent of the diameter of the container used for classification.

The valve 30 located in the resin transfer pipe 14 is opened to permit passage of the classified slurry of resin and inert material particles to descend and exit from the container 10. As the passing slurry flows past the means for sensing conductivity 32, the sensing means transmits the sensed conductivity along cable 34 to a conductivity measuring device 36 wherein the sensed conductivity is translated into a conductance value and thereby measured. Once the conductivity value has become substantially constant, the substantially constant value is stored and defines an initial conductance value.

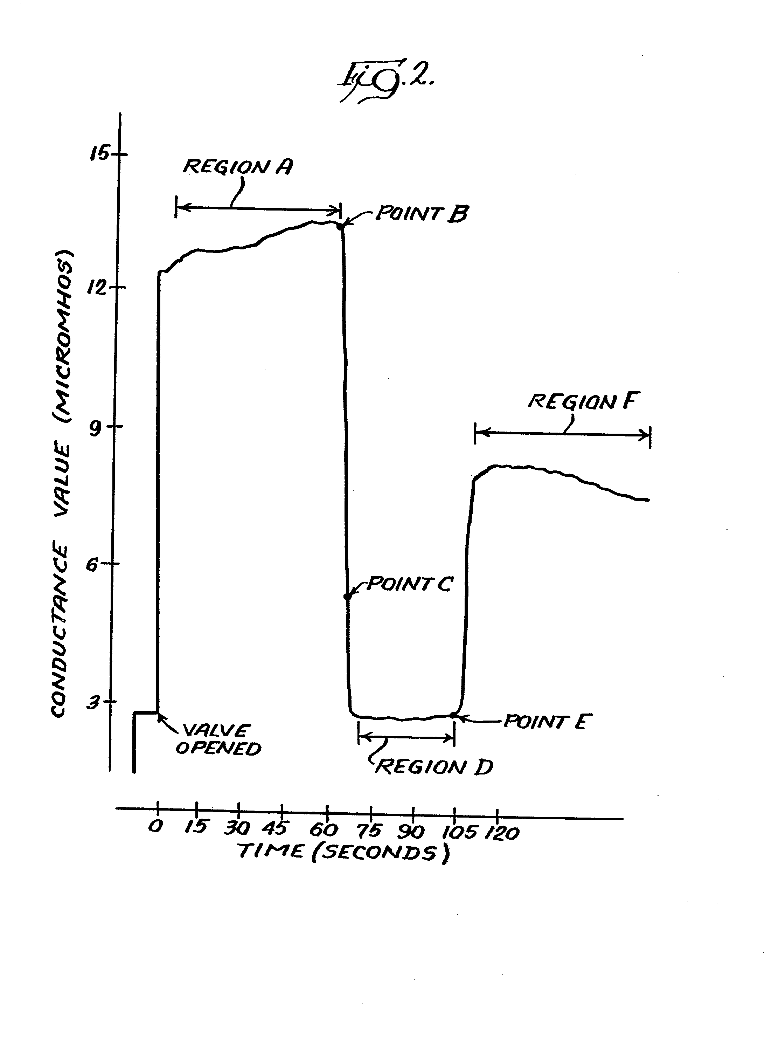

Typical conductance values are illustrated in the plot of Figure 2. In that Figure, the left-hand portion of the plot (denominated region A)

0128363

-15-

illustrates the substantial constancy of the initial conductance values.

Subsequent conductance values of the passing slurry are sensed, translated, and measured. Those subsequent conductance values are compared to the stored initial conductance value in the storage and comparison means 40 that is operably connected to the measuring means 36 by cable 38.

Passage of the slurry from the container 10 is terminated when a conductance value measured subsequent to the initial conductance value is at most about 30 percent of the initial conductance value. One such conductance value at which slurry passage may be terminated is illustrated in the plot of Figure 2 at point C. More preferably, passage is terminated when the subsequently measured conductance value is at most about 25 percent of the initial conductance value. The termination is typically effected when the first subsequently measured value is at most about 30 percent, and more preferably about 25 percent, of the initial conductance value.

Termination at the above mentioned conductance values permits passage of a slurry from the container that contains substantially all of the exhausted cation exchange resins. The almost vertical drop of conductance value in the plot of Figure 2 beginning at point B illustrates passage of the interface between the cation exchange resin and the inert particulate material.

The substantially horizontal portion of the plot of Figure 2 to the right of point B (denominated region D) illustrates the passage of a slurry containing substantially only the inert particulate material. The substantially vertical increase beginning at point E indicates the beginning of passage of a slurry containing anion exchange resin. The remainder of the plot (denominated region F) illustrates passage of a slurry containing substantially only anion exchange resin.

In preferred practice the valve 30 is shut automatically to terminate passage of the slurry from container 10 by passing an electric signal from the storage and comparison means 40 via cable 42 to the valve 30 which is preferably electrically controlled. This automatic termination feature is another of the novel and unexpected attributes of the present invention in that the present method does not require the presence of a trained operator to look for and read a particularly desired difference in conductance value, and then manually or by other means direct the termination of flow from the container.

The slurry which has passed from the container in preferred practice is preferably collected during that passage so that it may be regenerated as described hereinafter.

The inert particulate material 22 and anion exchange resin 20 which remain in the container after termination of passing of the slurry can be separated further if desired, although in preferred practice, the two materials are treated together during the regeneration of the anion exchange resin. That regeneration can take place within the container 10 used during the separation of cation exchange resin from the other materials of the mixed resin bed, or can be carried out in a separate container (not shown) by reopening the valve 30 and permitting the remaining contents of the container 10 to flow out into a suitable collection vessel (not shown).

The separated resins may then be individually regenerated and then recombined to form a regenerated mixed resin bed. Techniques for regeneration of anion exchange resins are well known in the art and will not be gone into detail herein.

Briefly, however, the collected slurry of exhausted cation exchange resin is contacted with an excess of a protic acid, such as an aqueous solution of hydrochloric acid or sulfuric acid, so that the protons of those acids can replace the cation present in the exhausted resin and produce the proton form of the previously exhausted cation exchange resin, thereby forming a regenerated cation exchange resin. In preferred practice, the regenerated cation exchange resin is rinsed substantially free of excess protic acid prior to its recombination with a regenerated form of the anion exchange resin.

The exhausted anion exchange resin, along with the inert particulate material, is contacted with an excess of a hydroxide ion-containing base, such as an aqueous solution of sodium hydroxide or potassium hydroxide, to exchange the anions present for hydroxide ion and produce the hydroxide form of the previously exhausted anion exchange resin, thereby regenerating that resin. Again, in preferred practice, the regenerated anion exchange resin is rinsed substantially free of the excess hydroxide ion-containing base prior to being admixed with a regenerated cation exchange resin.

The regenerated cation exchange resin and regenerated anion exchange resin are then admixed to form the regenerated mixed resin bed.

It is noted again that in usual, and preferred practice, the inert particulate material that was present in the original mixed resin bed is

-18-

substantially maintained with the anion exchange resin portion of that mixed resin bed. However, since the particulate material is inert to the conditions of separation and regeneration, that material is substantially unchanged by the processes hereinbefore are described.

The inert material may be included along with the cation exchange resin which has been separated from the classified mixed resin bed. Preferably, only a small amount is so separated although substantially all of the inert resin may be separated with the cation exchange resin. Again, the inert nature of the inert particulate material allows it to remain substantially unchanged during the separation and regeneration steps.

It is further noted that small amounts of resin and particulate matter fines; i.e., particles having a dimension substantially less than about 0.15 millimeters, may be present and or generated during the separation and regeneration steps. Methods for treating and removing such fines are discussed in the before mentioned U.S. patents. In addition, some particulate material that is neither a cation exchange resin, an anion exchange resin nor inert particulate material may be present in their mixed resin bed prior to separation. Elimination of such particulates is also described in the before-mentioned patents.

The conductivity sensing means 32, the conductivity measuring device 36 wherein the sensed conductivity is translated into a conductance value and thereby measured, and the means for storing and comparing conductance values 40 need not be separate components, but may be within one apparatus. Similarly, the function of translating sensed conductivity into a measured conductance value need not be carried out in one device but may be carried out in a plurality of devices, as may the functions of storing and comparing conductance values.

Only a cation exchange resin and an anion exchange resin need be used in another embodiment of this invention. Here, the above classification is again carried out for the exhausted bed resins, but the slurry so formed contains only two layers, a cation exchange resin on the bottom and an anion exchange resin on the top. The slurry is passed out of the classification container and all of the above-discussed steps of the resin separation are carried out except that slurry passage is terminated when a subsequently measured conductance value, preferably the first such value, is at most about 60 percent of the inital cation exchange resin conductance, and more preferably when that subsequent conductance value is about 40 percent of the initial conductance value.

It is further noted that the word "conductance value" as used herein means not only conductance measured in units of mhos, but also conductance measured in any machine readable manner such as, in units of volts, amperes, ohms or the like. Apparatus useful for carrying out the sensing, translating and measuring of conductance values, storing and comparing conductance values and transmitting a signal to terminate the passing of the slurried resin is disclosed in co-assigned U.S. patent application No. _____ filed concurrently herewith.

The present invention is further illustrated in the examples which follow.

Best Mode For Carrying Out The Invention

Example 1: Pilot Apparatus

A pilot classifying container is prepared from an eighteen inch diameter by forty-eight inch long clear acrylic cylinder having a foraminous, inverted frustoconically shaped funnel means located near the bottom and extending across the entire diameter of the container. The walls of the funnel means are at an angle of about 20° above horizontal, and tapered downwardly toward the center.

Piping for the classification container is arranged similarly to that shown in Figure 1 except that inlet pipe 12 and outler pipe 18 are not used for the pilot runs. Inlet pipe 16 is three quarters of an inch in diameter while outlet pipe 14 is one-inch in diameter. Classifying water is supplied by a Vanton Chemical-Gard close coupled polypropylene centrifugal pump, Model CCGH-P4200B. Flow rates are measured using a Fischer and Porter Company magnetic flow meter, Model 10A2227A.

The electronic system includes the following components: a Leads and Northrop conductivity monitor, model 7075-1-021-120-201-000, with a scale of zero to twenty micromhos for a cell constant of 0.1; a Rochester Instruments track and hold, Model XSC 136048572 A/B/C/D/E/F/H/J-I; a Rochester Instruments bias transmitter, Model SC1398; a Rochester Instrument equilization alarm, Model XET-1228; and a strip chart recorder.

The electronic system works as follows: The conductivity monitor senses and measures the conductivity of the passing resin slurry and translates the conductivity into a conductance value. The conductance value output is split into two signals. One signal is sent to resin slurry and

-21-

the track and hold. The bias transmitter is connected to the track and hold output and may be adjusted to provide an output that is a given percentage, e.g. 30 percent, of its input from the track and hold. The track and hold-bias transmitter combination thereby functions to store the initial conductance value and set the conductance value at which passing of the slurry is terminated.

The output of the bias transmitter is connected to one output of the equalization alarm. The second portion of the split signal from the conductivity monitor provides a second input to the equalization alarm. The equalization alarm compares the two signals it receives. When the inert particulate material starts coming into the slurry, the conductance drops rapidly and the conductance value from the conductivity monitor drops to meet the reduced, percentage conductance value stored in the equalization alarm, e.g., at most 30 percent of the initial value. When the two values are identical, the alarm goes off to trigger termination of slurry passage. The strip chart provides a record of the conductance values with time.

Example 2: Slurry Classification and Flow

The above pilot classifying container is used to demonstrate classification of the resin bed. Diamond Shamrock Corporation TRIOBED S-3TR, C-26TR and A-161TR resins are used as the inert particulate material, cation exchange resin and anion exchange resin, respectively  The cation and anion exchange resins are in ammonium and hydroxide forms, respectively.

Bed height characteristics are as shown in Table 1 using classifying water at a temperature of

-22-

65° F. flowing at a rate of 7.1 gallons per minute per square foot:

### Table 1
### Bed Characteristics*

| Resin | Bed Height (cm) | | Classified |
| | Settled | Classified | Expansion (%) |
|---|---|---|---|
| Cation | 15.5 | 19 | 22.6 |
| Inert | 26.5 | 36 | 55 |
| Anion | 48.5 | 98 | 182 |

_____

* Densities for the slurry particles in the forms of use are stated by the manufacturer as being: Cation exchange resin, 1.31; anion exchange resin 1.08; and inert particulate material 1.15, all in units of grams per milliliter.

After classification of the mixed resin bed, valve 30 is opened to pass the slurry out of the classifying container. The plot of Figure 2 beginning at zero time illustrates the conductance values of the passing slurry as that slurry passes the conductivity monitor. An analysis of that passing slurry over time is shown below in Table 2:

## Table 2

### Slurry Characteristics

| Sample Number | Time[1] | Sample Volume[2] | Volume Percent in Slurry[3] | | |
|---|---|---|---|---|---|
| | | | Cation | Inert | Anion |
| 1 | 60 | 200 | 100 | 0 | 0 |
| 2 | 65 | 203 | 99 | 1 | 0 |
| 3 | 70 | 114 | 85 | 15 | 0 |
| 4 | 75 | 140 | 2 | 98 | 0 |
| 5 | 80 | 152 | 1 | 99 | 0 |
| 6 | 85 | 135 | 1 | 99 | 0 |
| 7 | 90 | 145 | 1 | 99 | 0 |
| 8 | 95 | 150 | 0 | 100 | 0 |
| 9 | 100 | 146 | 0 | 100 | 0 |
| 10 | 105 | 132 | 0 | 100 | 0 |
| 11 | 110 | 100 | 0 | 60 | 40 |
| 12 | 115 | 133 | 0 | 1 | 99 |
| 13 | 120 | 145 | 0 | 1 | 99 |

[1] Time in seconds of the opening of the valve.

[2] Volume in cubic centimeters.

[3] Volume percent of mixed resin bed components. Cation = cation exchange resin; Inert = inert particulate material; and Anion = anion exchange resin.

The conductance values for the slurry at selcted times after the value 30 is opened are as shown in Table 3, below:

-24-

## Table 3

### Conductance Values

| Sample Number | Time (Seconds) | Conductance Value (Micromhos) |
|---|---|---|
| 1 | 60 | 13.3 |
| 2 | 65 | 5.9 |
| 3 | 70 | 2.9 |
| 4 | 75 | 2.7 |
| 13 | 120 | 8.2 |

Example 3:  Automatic Separation

The slurry passing valve 30 is linked mechanically to the equalization alarm so that activation of the alarm closes the valve 30.  The bias transmitter is set to transmit a conductance value of 30 percent of the initial conductance value.

After classifying a mixed resin bed having the components and amounts of the bed of Example 2, using the classifying flow rate of 7.1 gallons per minute per square foot and water at a temperature of 65° F. as the classification solvent, the valve 30 is opened.  The classified slurry passes from the classifying container, and its conductivity is measured as about 13 micromhos.  When the measured conductance value reaches about 5 micromhos, the equalization alarm is activated, closing the valve 30, thereby terminating the passage of slurry from the classification container.

The slurry so passed and collected is substantially free of anion exchange resin and contains a minimal amount of inert prticulate material mixed with the cation exchange resin.

WHAT IS CLAIMED IS:

1. A method of separating the resins of an exhausted, mixed resin bed comprising the steps of:

(a) supplying a classifying fluid;

(b) supplying an exhausted mixed resin bed including

(i) an exhausted cation exchange resin having a first density and first conductance value when suspended in said classifying fluid at a first concentration,

(ii) an inert particulate material having a second density that is less than said first density and a second conductance value when suspended in said classifying fluid that is at most about 30 percent of the conductance of the cation exchange resin in said classifying fluid when measured at said first concentration, and

(iii) an exhausted anion exchange resin having a third density that is less than said second density and a third conductance value that is greater than said second conductance value when suspended in said classifying fluid measured at said first concentration;

(c) classifying said exhausted mixed resin bed in a container with a classifying fluid to form a substantially vertical column of slurry having a top end and a bottom end wherein said exhausted cation and anion exchange resins are classified substantially so that said cation exchange resin forms the bottom layer, said inert material forms an intermediate layer and said anion exchange resin forms the top layer;

(d)   passing said slurry out of said container from an area near the bottom end of said column while maintaining said classification;

(e)   sensing the conductivity of said passing slurry and translating said conductivity into a measured conductance value;

(f)   storing the conductance value so translated and measured in a means for storing and comparing conductance values after said value has become substantially constant, to define an initial conductance value;

(g)   sensing, translating and measuring subsequent conductance values of said passing slurry;

(h)   comparing said subsequent conductance values to said stored, initial conductance value in said storage and comparison means; and

(i)   terminating said passing when a subsequently measured conductance value is at most about 30 percent of said initial conductance value, whereby said passed slurry contains substantially all of said exhausted cation exchange resin.

2.   The method according to claim 1 wherein said inert particulate material is a polymer that is substantially free from charge-containing functional groups.

3.   The method according to claim 1 wherein the conductivity of said inert, particulate material is less than about 25 percent of the conductivity of said cation exchange resin in said classifying fluid when measured at said first concentration.

4.   The method according to claim 1 wherein said classifying fluid is water having a conductance of less than about 10 micromhos.

5.   The method according to claim 1 wherein said termination of slurry passage is effected automatically by passage of a signal from said storage and comparison means to a means for terminating said passage.

6. A method of separating the resins of an exhausted mixed resin bed comprising the steps of:

(a) supplying water having a conductivity of less than about 10 micromhos as a classifying fluid;

(b) supplying an exhausted mixed resin bed including

(i) an exhausted cation exchange resin having a first density and a first conductance value when suspended in said classifying water at a first concentration,

(ii) an inert, particulate polymer that is substantially free from charge-containing groups having a second density that is less than said first density and having a second conductance value when suspended in said classifying water at said first concentration that is less than about 25 percent of the conductance value of said cation exchange resin suspended in said classifying water at said first concentration, and

(iii) an exhausted anion exchange resin having a third density that is less than said second density and having a third conductance value when suspended in said classifying water at said first concentration that is greater than said second conductance value;

(c) classifying said exhausted, mixed resin bed with said classifying water in a container to form a substantially vertical column of slurry having a top end and a bottom end, wherein said exhausted cation and anion exchange resins are classified substantially according to their respective densities and said inert particulate polymer forms a layer substantially intermediate between said resins;

(d)  passing said slurry out of said container from an area near the bottom end of said column while maintaining said classifications;

(e)  sensing the conductivity of said passing slurry and translating said conductivity into a measured conductance value;

(f)  storing the conductance value so translated and measured in a means for storing and comparing conductance values after said value has become substantially constant, to determine an initial conductance value;

(g)  sensing, translating, and measuring subsequent conductance values of said passing slurry;

(h)  comparing said subsequent conductance values to said stored initial conductance value in said storage and comparison means;

(i)  terminating said passing automatically by passing an electric signal from said storage and comparison means to an electrically connected means for terminating said passing when a subsequently measured conductance value is at most about 25 percent of said initial conductance value, whereby said passed slurry contains substantially all of said exhausted cation exchange resin; and

(j)  collecting the passed slurry of exhausted cation exchange resin.

7.  The method according to claim 1 wherein the cation exchange resin portion of the resin bed is expanded to about 15 to about 25 percent over its settled volume during the classifying step.

8. A method of separating the resins of an exhausted, mixed resin bed comprising the steps of:

(a) supplying a classifying fluid;

(b) supplying an exhausted mixed resin bed including

(i) an exhausted cation exchange resin having a first density and first conductance value when suspended in said classifying fluid at a first concentration, and

(ii) an exhausted anion exchange resin having a second density that is less than said first density and a second conductance value that is less than said first conductance value when suspended in said classifying fluid measured at said first concentration;

(c) classifying said exhausted mixed resin bed in a container with a classifying fluid to form a substantially vertical column of slurry having a top end and a bottom end wherein said exhausted cation and anion exchange resins are classified substantially so that said cation exchange resin forms the bottom layer;

(d) passing said slurry out of said container from an area near the bottom end of said column while maintaining said classification;

(e) sensing the conductivity of said passing slurry and translating said conductivity into a measured conductance value;

(f) storing the conductance value so translated and measured in a means for storing and comparing conductance values after said value has become substantially constant, to define an initial conductance value;

(g) sensing, translating and measuring subsequent conductance values of said passing slurry;

0128363

(h)   comparing said subsequent conductance values to said stored, initial conductance value in said storage and comparison means; and

(i)   terminating said passing when a subsequently measured conductance value is at most about 55 percent of said initial conductance value, whereby said passed slurry contains substantially all of said exhausted cation exchange resin.

Fig.1.

0128363

Fig.2.